(19) Europäisches Patentamt

European Patent Office

Office européen des brevets

(11) **EP 0 951 133 A2**

(12) **EUROPÄISCHE PATENTANMELDUNG**

(43) Veröffentlichungstag:
20.10.1999 Patentblatt 1999/42

(51) Int. Cl.⁶: **H02M 3/158**, H02M 1/12

(21) Anmeldenummer: 98811241.3

(22) Anmeldetag: 17.12.1998

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **15.04.1998 DE 19816685**

(71) Anmelder:
**HILTI Aktiengesellschaft
9494 Schaan (LI)**

(72) Erfinder:
• **Wissmach, Walter
  80637 München (DE)**
• **Bauer, Rudolf
  86899 Erpfting bei Landsberg am Lech (DE)**

(74) Vertreter: **Wildi, Roland et al
Hilti Aktiengesellschaft
Patentabteilung
9494 Schaan (LI)**

(54) **Verfahren und aktives Filter zur Reduzierung der Restwelligkeit des einem Netz durch eine Last entnommenen Stroms**

(57) Zur Reduzierung der Restwelligkeit des einem Netz (9) durch einen Last (10) über einen Gleichrichter (2) entnommenen Stroms mittels eines aktiven Netzrückwirkungsfilters wird gemäß der Erfindung vorgeschlagen, den Stromweg zwischen dem Gleichrichter (2) und der Last (10) in eine Mehrzahl, beispielsweise in zwei jeweils mit einem separaten Hochsetzsteller ausgestattete parallele Stromkanäle ($I_t$, $J_t$) aufzuteilen. Dabei ist vorgesehen, den als Teil eines Leistungsfaktorreglers vorgesehenen Schalter (5a, 5b) des Hochsetzstellers mit gegeneinander phasenverschobenen Schaltsignalen (S) anzusteuern, wodurch sich aufgrund der additiven Überlagerung der Ströme in den einzelnen Stromkanälen eine reduzierte Restwelligkeit am Netzeingang (9) ergibt. Die Gesamtschaltung verhält sich dann ähnlich wie ein Leistungsfaktorregler, der mit erheblich höherer Schaltfrequenz arbeitet, jedoch ohne dessen Nachteile, nämlich erhöhte Schalt- und Magnetisierungsverluste zu haben. Von besonderem Vorteil ist, daß ein in der Regel notwendiges Funkentstörfilter (1) vereinfacht werden kann, und daß das Volumen der Boost-Drosseln (3a, 3b) in den beiden Stromzweigen erheblich verkleinert werden kann, was zu größerer Flexibilität bei der Schaltungsauslegung und zu Raum- und Gewichtseinsparungen führt.

Fig. 1

**Beschreibung**

Die Erfindung betrifft ein Verfahren sowie ein aktives Netzrückwirkungsfilter zur Reduzierung von Rückwirkungen auf den zeitlichen Verlauf, d.h., der Restwelligkeit des einem Netz durch eine Last über einen Gleichrichter entnommenen Stroms.

Bei einer Vielzahl von elektrischen und elektronischen Geräten neuerer Bauart, insbesondere bei Netzgeräten, Schaltnetzteilen, Vorschaltgeräten, Frequenzumrichtern, elektronisch kommutierten Antrieben und dergleichen werden, sofern nicht entsprechende Gegenmaßnahmen getroffen sind, mehr oder weniger stark nichtsinusförmige Ströme aufgenommen. Der dem Netz entnommene Strom weist also einen mehr oder weniger hohen Oberschwingungsanteil auf. Aufgrund geltender Normen und Vorschriften (vergleiche IEC 1000-3-2 sowie EN 61000-3-2) dürfen elektrische Geräte der genannten Art, darunter auch Elektrowerkzeuge, dem öffentlichen Stromnetz nur ein bestimmtes Maß an Stromoberschwingungen entnehmen. Die zu treffenden Gegenmaßnahmen können in passiven oder aktiven Netzfiltern bestehen, welche insbesondere für mittlere und hohe Leistungen einen beträchtlichen Kosten- und Gewichtszuwachs der damit auszurüstenden elektrischen Geräte mit sich bringen. Auch ergeben sich häufig - vor allem bei handgehaltenen Elektrowerkzeugen - Raum- und Einbauprobleme.

Bekannt sind vielfältige Verfahren, die Oberschwingungen oder Stromharmonischen unter das vorgegebene Maß zu bringen. Man kann grob unterscheiden zwischen passiven und aktiven Filtern. Passive Filter bestehen in der Regel aus Kombinationen von Induktivitäten und Kondensatoren, die entweder wechselstromseitig oder einem Gleichrichter nachgeschaltet auf der Gleichstromseite angeordnet sind. Für aktive Filter sind unterschiedliche Topologien bekannt; sie enthalten in der Regel mindestens einen elektronischen Leistungsschalter. Einen Überblick über bekannte Verfahren und Schaltungen zur Reduzierung der Netzstrom-Restwelligkeit, sowohl passiv als auch aktiv, gibt Lit. [1] (vergleiche Anlage).

Die weiteste Verbreitung unter den aktiven Verfahren hat die als Power Factor Corrector (PFC) bekannte Lösung erfahren. Es handelt sich dabei im Prinzip um einen im Stromweg einer Last liegenden Hochsetzsteller (häufiger bekannt unter dem englischen Begriff "Boost-Converter"), bei dem der Netzaufnahmestrom sinusförmig geregelt wird. In Lit. [2] ist die Arbeitsweise eines solchen PFCs im Detail beschrieben. Entsprechende Steuer- und Regelschaltungen sind als ICs auf dem Markt erhältlich. Es wird insoweit auch auf EP 0 669 703 A2 sowie auf EP 0 675 588 A2 verwiesen.

Bedingt durch die schaltende Arbeitsweise entsteht über die Induktivität der Reihendrossel des Hochsetzstellers ein Netzstromverlauf, der überlagert zu der gewünschten Sinusform eine dreieck- oder rampenförmige Restwelligkeit aufweist: es wird hierzu beispielshalber auf Bild 4 von Lit. [2] verwiesen. Diese Restwelligkeit enthält höherfrequente Anteile, die - um den Funkentstörnormen zu genügen - wiederum durch (in der Regel passive) Filter unterdrückt werden müssen. Hierbei gibt es einen inversen Zusammenhang zwischen dem Aufwand beim Hochsetzsteller und beim Funkentstörfilter. Je höher die Schaltfrequenz bzw. die Induktivität der Boost-Drossel, desto geringer wird die Restwelligkeit auf dem Netzstrom und folglich desto geringer wird der Funkentstörungsaufwand. Auch wenn sich hier ein Kompromiß finden läßt, ist bei allen aktiven Lösungen der damit verbundene hohe Aufwand und insbesondere im Hinblick auf handgehaltene Geräte das Gewicht und Volumen der Induktivbauelemente von Nachteil.

Um die Restwelligkeit des Stromes weiter zu verringern, ohne die Boost-Drossel zu vergrößern, kann die Schaltfrequenz des Hochsetzstellers erhöht werden. Dem steht aber entgegen, daß die Schaltverluste im Leistungsschalttransistor ansteigen, worauf bereits in Lit. [2] hingewiesen ist. Heutige Lösungen sehen übliche Schaltfrequenzen im Frequenzbereich von ca. 40 kHz bis 100 kHz vor.

Der Erfindung liegt damit die Aufgabe zugrunde, ein Verfahren und eine Schaltungsanordnung anzugeben, durch die sich bei Betrieb einer Last, insbesondere über einen Gleichrichter, die unerwünschten Rückwirkungen auf den zeitlichen Verlauf des dem Netz entnommenen Stroms weiter reduzieren lassen, ohne das (oder die) Induktivitätbauelement(e) und/oder die Schaltfrequenz des Hochsetzstellers zu erhöhen.

Die erfindungsgemäße Lösung dieser Aufgabe ist hinsichtlich des anzuwendenden Verfahrens im Patentanspruch 1 definiert mit vorteilhaften Ergänzungen, die in abhängigen Patentansprüchen enthalten bzw. in der nachfolgenden Beschreibung erläutert sind.

Ein aktives Netzrückwirkungsfilter mit erfindungsgemäßen Merkmalen ist Gegenstand des Anspruchs 5, wobei vorteilhafte Ergänzungen und Ausführungsvarianten ebenfalls in weiteren abhängigen Patentansprüchen definiert und in der nachfolgenden Beschreibung erläutert sind.

Das erfindungsgemäße Verfahren zur Reduzierung der Restwelligkeit des einem Netz durch eine Last vorzugsweise über einen Gleichrichter entnommenen Stroms bzw. die neuartige Schaltungsanordnung gemäß der Erfindung basiert auf der Grundidee mehrere, insbesondere separate Hochsetzsteller vorzusehen und diese parallel zu schalten. Dadurch läßt sich - wie nachfolgend erläutert - bei gegebener Schaltfrequenz die Stromwelligkeit stark reduzieren, insbesondere halbieren und die Frequenz der Restwelligkeit verdoppeln. Beides führt jeweils zu einer Reduzierung des Aufwands für das vorgeschaltete Funkentstörfilter.

Zunächst scheint es so, als ob sich der Bauteileaufwand entsprechend der Anzahl der mit Hochsetzsteller zu bestückenden Stromkanäle erhöhen, beispielsweise bei zwei Kanälen verdoppeln müßte. Dies ist jedoch nicht der Fall, wie sich aus der nachfolgenden Beschreibung eines Ausführungsbeispiels mit Bezug auf die Zeichnung ersehen läßt, in der

Fig. 1    das Prinzipschaltbild eines aktiven Netzrückwirkungsfilters mit erfindungsgemäßen Merkmalen,

Fig. 2    zeitabhängige Stromverläufe an verschiedenen Punkten der Schaltung nach Fig. 1 wiedergibt, und

Fig. 3    das Prinzipschaltbild einer Schaltungsanordnung zur Rekonstruktion eines der abfallenden Flanke des durch eine der Boost-Drosseln der Schaltung nach Fig. 1 fließenden Stroms entsprechenden Anteils eines proportionalen Meßstroms.

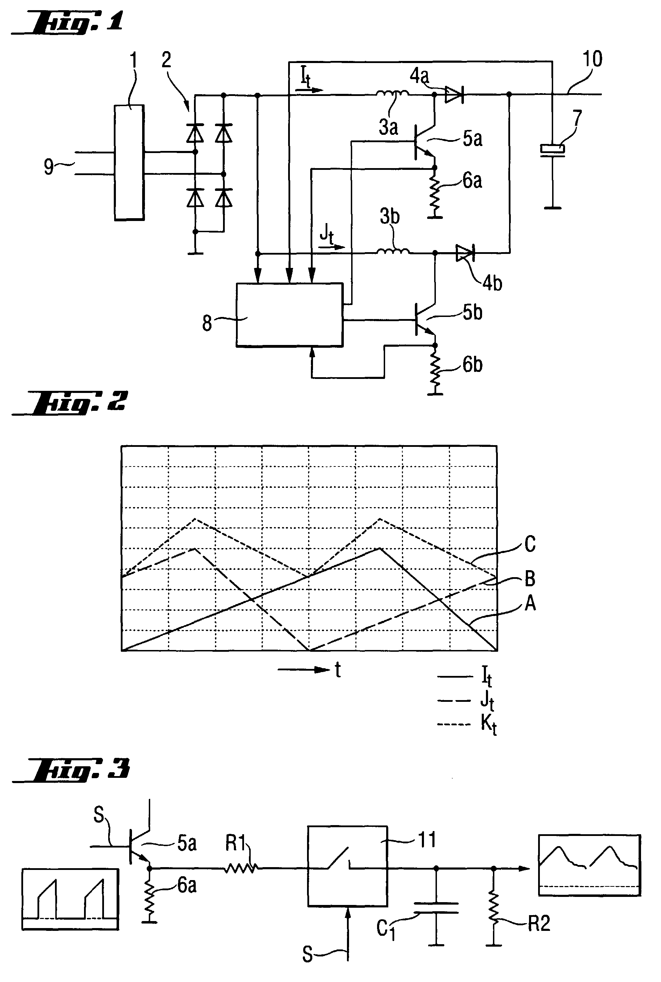

Fig. 1 veranschaulicht ein aktives Netzrückwirkungsfilter mit zwei in getrennten aber parallelen Stromwegen vorgesehenen Hochsetzstellern. Ein von einem Netz 9 unter Zwischenschaltung eines Funkentstörfilters 1 gespeister Eingangsgleichrichter 2 ist ausgangsseitig über zwei parallel geschaltete Stromkanäle, nämlich einmal über die Reihenschaltung einer ersten Boost-Drossel 3a und einer ersten Boost-Diode 4a und andererseits über die Reihenschaltung einer zweiten Boost-Drossel 3b und einer zweiten Boost-Diode 4b auf einen Lastanschluß 10 geschaltet. Ein Zwischenkreiskondensator 7 wird ebenso wie der Eingangsgleichrichter 2 und das Funkentstörfilter 1 von beiden parallelen Stromkanälen $I_t$ und $J_t$ gemeinsam genutzt. Ein jeweiliger Querzweig vom Verbindungspunkt zwischen den Boost-Drosseln 3a, 3b und den Boost-Dioden 4a, 4b auf Bezugspotential wird (im wesentlichen) durch ein Schaltelement 5a bzw. 5b eines Leistungsfaktorreglers gebildet und kann aus einem oder bei höherer Leistung aus mehreren parallelen Schalttransistoren aufgebaut sein, die gegebenenfalls in zwei Schaltergruppen, in diesem Fall die Gruppen 5a und 5b, aufgeteilt werden können. Lediglich die Boost-Dioden 4a und 4b und die Boost-Induktivitäten bzw. -Drosseln 3a, 3b müssen mehrfach, im dargestellten Beispiel doppelt ausgeführt werden; sie können jedoch jeweils auf einen entsprechenden Anteil, beispielsweise den halben Strom dimensioniert werden. Dies ist ein erster Vorteil der Erfindung, da bei großen Drosselbauelementen eine Aufteilung in mehrere kleinere Bauelemente erfahrungsgemäß zu Kosteneinsparungen und zu größeren Freiheiten bei der Montage, also zu günstigeren Montageverhältnissen beiträgt. Als weiterer Vorteil ergibt sich, daß ohne wesentlichen Mehraufwand bei den Leistungsbauelementen beträchtliche Einsparungen beim Funkentstörfilter 1 realisiert weren können. Mit anderen Worten: Bei gleichem Funkentstörfilter 1 können die Boost-Drosseln 3a, 3b verkleinert und/oder die Schaltfrequenz kann verringert werden.

Um diese Vorteile zu erreichen, ist es jedoch erforderlich die beiden Hochsetzstellerkanäle über eine Steuereinheit 8 geeignet anzusteuern. Dies bedeutet, daß die beiden Stromkanäle nicht im Gleichtakt - was einer einkanaligen Lösung entsprechend würde - sondern mit einer entsprechenden Phasenverschiebung zwischen den Kanälen angesteuert werden. In dem dargestellten Beispiel mit zwei Stromkanälen wird dies erreicht, wenn die im jeweiligen Leistungsfaktorregler vorhandenen Puls-Weiten-Modulatoren (PW-Modulatoren) beider Kanäle mit um 180° phasenverschobenen Sägezahnsignalen betrieben werden. Dies führt dazu, daß die von der Puls-Weiten-Modulation (PWM) herrührenden, mehr oder weniger dreieckförmigen Welligkeiten der beiden Kanalströme ebenfalls um 180° phasenverschoben sind. Am Netzeingang 9, wo sich die beiden Tellströme zum Netzstrom addieren, tritt dann eine teilweise Kompensation dieser Welligkeiten auf, so daß die resultierende Welligkeit erheblich geringer ist, wobei ihre Frequenz der doppelten Schaltfrequenz der einzelnen Leistungsfaktorregler entspricht.

Dieser Fall ist in dem Stromverlaufsdiagramm der Fig. 2 veranschaulicht, in dem die Kurve A den Stromverlauf $I_t$ in der ersten Boost-Drossel 3a, die Kurve B den Stromverlauf $J_t$ In der zweiten Boost-Drossel 3b und die Kurve C den Summenstrom $K_t$ in schematischer Darstellung wiedergibt.

Ein optimierter Sonderfall ergibt sich, wenn die Phasenströme exakt symmetrisch-dreieckigen Verlauf zeigen. Dies ist der Fall, wenn die Ein- und Ausschaltzeiten der Schalter 5a bzw. 5b gleich sind. Dann löschen sich die Welligkeiten der beiden Kanalströme vollständig aus und der netzseitige Summenstrom ist "ideal glatt".

Das zugrundeliegende Verfahren läßt sich auch als Transformation beschrieben, bei der die Schaltfrequenz der Schalter 5a, 5b auf eine höhere Frequenz, nämlich dem der Kanalzahl entsprechenden Vielfachen - im dargestellten Beispiel um den Faktor "2" - erhöht wird. Die Gesamtschaltung vehält sich dann ähnlich wie eine Hochsetzstelleranordnung, die mit erheblich höherer Schaltfrequenz arbeitet, jedoch ohne dessen Nachteile, nämlich erhöhte Schalt- und Magnetisierungsverluste zu haben.

Die beschriebenen Vorteile ergeben sich auch - zum Teil in erhöhtem Maße - wenn drei oder mehr Kanäle vorgesehen werden. Die einzelnen Kanäle müssen jeweils geeignet phasenverschoben angesteuert werden, wobei die Restwelligkeit am Netz dann am geringsten wird, wenn für die Phasenverschiebung $\Delta\varphi$ zwischen den Kanälen gilt:

$$\Delta\varphi = 360°/\text{Kanalzahl}.$$

Der mit der Kanalzahl steigende Aufwand muß allerdings in Relation zum Nutzen gesetzt werden, wobei letzterer in einer weiteren Verkleinerungsmöglichkeit für die Boost-Drosseln und einer Vereinfachung des Funktentstörfilters bestehen kann.

Für eine optimale Anpassung an bestimmte Funktentstörfilter bzw. an entsprechende Funkentstörnormen kann es im Einzelfall günstig sein, von der oben definierten Phasenverschiebung abzuweichen. In einem solchen Fall werden zwar die ungeradzahligen Harmonischen der Netzfrequenz nicht vollständig eliminiert. Dafür werden aber die geradzahligen Harmonischen etwas niedriger.

Eine weitere Möglichkeit, zu einer geringeren Kerngröße und damit zu Kosten- und Baugrößeneinsparungen bei den Boost-Drosseln zu kommen, besteht in folgender vorteilhafter Ergänzung der Erfindung:
Die Boost-Drosseln 3a, 3b werden vom Strom nur einer Polarität durchflossen. Dadurch wird das Kernmaterial nur in einem Quadranten der magnetischen Hysteresekennlinie ausgenutzt. Für eine bessere Ausnutzung des Kernmaterials ist es vorteilhaft in den magnetischen Kreis, und zwar vorzugsweise im Luftspalt, einen Permanentmagneten oder allgemeiner ein permanentmagnetisches Material einzubringen, dessen Polarität so gewählt wird, daß sie der Magnetisierung durch die strombeaufschlagte Wicklung entgegengesetzt ist. Hierdurch verschiebt sich der Arbeitspunkt der jeweiligen Drossel bei einem Strom gleich Null in den dritten Quadranten der Hysteresekurve, wodurch praktisch (fast) der doppelte Induktionshub zur Verfügung steht, was bei gegebener Drosselinduktivität eine wesentlich geringere Kerngröße ermöglicht.

Aufgrund der bisherigen Erläuterungen der Erfindung ist für den Fachmann unschwer erkennbar, daß die Möglichkeit besteht, mehrere gleichartige PFC-Schaltungen zu einem mehrphasigen System zusammenzuschalten. Dies kann so erfolgen, daß je Netzphase ein kompletter PFC-Schaltkreis mit jeweils einem einphasigen Gleichrichter vorgesehen wird, die beispielsweise eingangsseitig in Sternschaltung und ausgangsseitig über entsprechende Entkopplungsdioden parallelgeschaltet angeordnet werden.

Eine weitere Verbesserung und Optimierung der Schaltung ergibt sich, wenn für eine gleichmäßige Stromaufteilung auf die beiden leistungsfaktorgeregelten Stromkanäle gesorgt wird, wodurch eine bestmögliche Kompensation der Welligkeiten erreicht wird. Hierzu hat es sich als vorteilhaft erwiesen, für jeden Stromkanal einen eigenständigen Stromregelkreis vorzusehen, welcher mit einem für alle Kanäle gleichen Stromsollwert beaufschlagt wird. Dabei ergibt sich jedoch das Problem, daß eigentlich jeweils der in der Boost-Drossel fließende Strom gemessen werden müßte. Die bei einkanaligen Leistungsfaktorreglern übliche Lösung, nämlich den Strom über einen Shunt im masseseltigen Rückflußzweig zu messen, läßt sich bei der erfindungsgemäßen mehrkanaligen Lösung nur bei hohem Aufwand anwenden. Eine Messung im Hinflußzweig, also des Drosselstroms direkt, müßte auf hohem Potential erfolgen und wäre sehr aufwendig.

In vorteilhafter Ergänzung des Erfindungsgedankens werden statt dessen die Ströme in den geschalteten Strecken der Schalter 5a bzw. 5b gemessen. Dies ist z.B. mit einem Shunt 6a bzw. 6b in der Emitter- bzw. Sourceleitung möglich, kann jedoch auch in der Kollektor- bzw. Drainleitung vorgesehen werden. Zwar führt der jeweilige Schalter 5a bzw. 5b nur einen Teil des Stroms in der zugeordneten Boost-Drossel 3a bzw. 3b, nämlich dann, wenn der betreffende Schalter EIN-geschaltet ist. Die Berücksichtigung der abfallenden Flanke des Rampenverlaufs des Stroms durch die betreffende Boost-Drossel läßt sich jedoch abschätzen bzw. mit verhältnismäßig geringem technischen Aufwand rekonstruieren. Hierzu wird auf die Fig. 3 verwiesen.

Die dargestellte Schaltungsanordnung dient zur "Rekonstruktion" der abfallenden Flanke des durch die zugeordnete Boost-Diode fließenden Stroms mittels einer RC-Kombination und eines im Takt des Schaltsignals S für den (Schalter-)Transistor 5a bzw. 5b gesteuerten analogen Schalters 11. Diese Schaltungsanordnung arbeitet wie folgt: Ist der Transistor 5a leitend, so steigt der Strom durch die entsprechende Boost-Drossel 3a und den Transistor 5a an. Dieser Strom kann im Shunt 6a gemessen werden. Gleichzeitig ist der Analogschalter 11 eingeschaltet, so daß die Spannung im Speicherkondensator $C_1$ der Shunt-Spannung folgt. Voraussetzungsgemäß ist ein zum Ausfiltern der beim Schalten des Transistors 5a entstehenden Störgrößen vorhandener Widerstand R1 relativ niederohmig gewählt. Wird anschließend der Transistor 5a ausgeschaltet, so sinkt der Strom durch die Boost-Drossel 3a linear ab. Da der Strom aber jetzt über die Boost-Diode 4a in den Zwischenkreiskondensator 7 fließt, ist der Shunt 6a stromlos und das Signal der abfallenden Flanke fehlt. Dieses Signal wird nun nachgebildet, indem man den Analogschalter 11 öffnet und den Kondensator $C_1$ über den Widerstand R2 entlädt. Werden die Werte für $C_1$ und R2 geeignet gewählt, so wird die Entladungsspannungskurve dem nachzubildenden Anteil des durch die Boost-Drossel fließenden Stroms sehr ähnlich sein. Eine sehr große Genauigkeit ist hier nicht erforderlich, da zum einen für den zugeordneten Stromregler nur der Strommittelwert interessant ist und weil zum anderen der überlagerte Zwischenkreis-Spannungsregler etwaige Abweichungen ausregelt.

Eine zwangsweise Synchronisierung der Spannung am Kondensator $C_1$ auf die Shunt-Spannung ergibt sich beim nächsten Wiedereinschalten.

**Literaturliste**

Lit. [1] Dr. Richard Redl:
"Achieving Compliance with New Line-Harmonics Regulations", ELFI S.A., Seminarunterlage der PCIM '96 vom 20. Mai 1996, Nürnberg

Lit. [2] Michael Herfurth:
"Aktive Oberwellenfilterung für Netzgleichrichter höherer Ausgangsleistung", Siemens Components 24 (1986), Heft 1, Seite 9-13

**Patentansprüche**

1. Verfahren zur Reduzierung von Rückwirkungen auf den zeitlichen Verlauf des einem Netz über einen Gleichrichter durch eine Last entnommenen Stroms mittels aktiver Filterung der der Netzgrundschwingung überlagerten Oberwellen mit Hilfe eines Leistungsfaktor-Regelkreises (PFC) mit Puls-Weiten-Modulation eines Schaltsignals (S), durch welches der Netzaufnahmestrom eines Hochsetzstellers beeinflußt wird, **dadurch gekennzeichnet,** daß der Stromweg zwischen dem Gleichrichter (2) und der Last (10) auf eine Mehrzahl von parallelen, jeweils mit einem gleichartigen aktiven Filter bestückten Kanälen ($I_t$, $J_t$) aufgeteilt wird, deren Schaltsignale bei jeweils im wesentlichen gleicher Puls-Weiten-Modulation in ihrer Phase so gegeneinander verschoben werden, daß sich durch additive Überlagerung der einzelnen Kanalströme eine reduzierte resultierende Welligkeit des Gesamtstroms am Netzeingang (9) ergibt.

2. Verfahren nach Anspruch 1, **dadurch gekennzeichnet,** daß die Puls-Weiten-Modulatoren der einzelnen Stromkanäle mit in der Phase verschobenen Sägezahnsignalen angesteuert werden.

3. Verfahren nach Anspruch 2, **dadurch gekennzeichnet,** daß zwei parallele Sromkanäle vorgesehen werden, deren Puls-Welten-Modulatoren mit um 180° phasenverschobenen Sägezahn-Ansteuersignalen betrieben werden.

4. Verfahren nach einem der vorstehenden Ansprüche, **dadurch gekennzeichnet,** daß jedem der parallelen Stromkanäle ein eigenständiger Stromregelkreis zugeordnet wird, welcher jeweils mit einem für alle Kanäle gleichen Stromsollwert beaufschlagt wird.

5. Aktives Netzrückwirkungsfilter zur Reduzierung der Restwelligkeit des einem Netz (9) durch eine Last über einen Gleichrichter (2) entnommenen Stroms, **dadurch gekennzeichnet,** daß der Stromweg zwischen dem Gleichrichter (2) und der Last (10) in eine Mehrzahl jeweils mit einem separaten Hochsetzteiler ausgestattete parallele Stromkanäle aufgeteilt ist, deren jeweils zugeordneter Leistungsfaktorregler die im jeweilig fußpunktseitig auf Bezugspotential gehaltenen Querzweig zwischen einer jeweiligen Boost-Drossel (3a, 3b) und einer Boost-Diode (4a, 4b) des Hochsetzstellers vorhandenen Schalter (5a, 5b) mit gegeneinander phasenverschobenen Schaltsignalen (S) gleichen Tastverhältnisses ansteuern, derart, daß der durch additive Überlagerung der Ströme in den einzelnen Stromkanälen gebildete Gesamtstrom eine reduzierte, resultierende Restwelligkeit am Netzeingang (9) aufweist.

6. Netzrückwirkungsfilter nach Anspruch 5, **dadurch gekennzeichnet,** daß zur gegenseitigen Phasenverschiebung der Schaltsignale (S) für die einzelnen Schalter (5a, 5b) die jeweiligen Ansteuersignale von in den Leistungsfaktorreglern vorhandenen Puls-Welten-Modulatoren in der Phase gegeneinander verschoben werden.

7. Netzrückwirkungsfilter nach Anspruch 5 oder 6, **dadurch gekennzeichnet,** daß für alle Hochsetzsteller nur ein gemeinsam genutzter Zwischenkreiskondensator (7) vorhanden ist.

8. Netzrückwirkungsfilter nach einem der Ansprüche 5 bis 7, **dadurch gekennzeichnet,** daß zwei separate, parallel betriebene Hochsetzsteller vorhanden sind, deren Schalter (5a, 5b) gegenphasig betrieben werden.

9. Netzrückwirkungsfilter nach einem der vorstehenden Ansprüche 6 bis 8, **dadurch gekennzeichnet,** daß in die magnetischen Kreise der Boost-Drosseln (3a, 3b) jeweils ein Permanentmagnet oder permanentmagnetisches Material verteilt eingebracht ist, dessen Polarität so ausgerichtet ist, daß sie der Magnetisierung bei Stromfluß durch die jeweilige Wicklung der Boost-Drossel (3a, 3b) entgegengesetzt ist.

10. Netzrückwirkungsfilter nach einem der Ansprüche 6 bis 9, **dadurch gekennzeichnet,** daß zur gleichmäßigen Stromaufteilung auf die einzelnen Kanäle für jeden Kanal ein eigenständiger Stromregelkreis vorgesehen ist, welcher mit einem für alle Kanäle gleichen Stromwert beaufschlagt wird.

11. Netzrückwirkungsfilter nach Anspruch 10, **dadurch gekennzeichnet,** daß der Strom in den einzelnen Kanälen über einen im Laststrompfad des jeweiligen Schalters (5a, 5b) liegenden Shunt (6a, 6b) gemessen wird.

12. Netzrückwirkungsfilter nach Anspruch 11, **dadurch gekennzeichnet,** daß der Shunt (6a, 6b) zwischen dem jeweiligen Schalter (5a, 5b) und Bezugspotential liegt, und daß eine in Abhängigkeit vom den jeweiligen Schalter (5a, 5b) betätigenden Schaltsignal (S) aktivierbare Speicherschaltung ($C_1$, R2)

vorhanden ist, die bei gesperrtem Schalter (5a, 5b) die abfallende Flanke des dem durch die Boost-Drosel (3a, 3b) fließenden Stroms entsprechenden Meßstromanteil nachbildet.

Fig. 1

Fig. 2

$$I_t$$
$$J_t$$
$$K_t$$

Fig. 3